**Europäisches Patentamt**

**European Patent Office**

**Office européen des brevets**

(19)

(11) Veröffentlichungsnummer: **0 061 099**
**B1**

# EUROPÄISCHE PATENTSCHRIFT

(12)

(45) Veröffentlichungstag der Patentschrift:
**25.01.84**

(51) Int. Cl.³: **B 23 B 29/03**, B 23 B 31/06

(21) Anmeldenummer: **82102020.3**

(22) Anmeldetag: **12.03.82**

(54) **Bohrwerkzeug.**

(30) Priorität: **16.03.81 AT 1192/81**

(43) Veröffentlichungstag der Anmeldung:
**29.09.82 Patentblatt 82/39**

(45) Bekanntmachung des Hinweises auf die Patenterteilung:
**25.01.84 Patentblatt 84/4**

(84) Benannte Vertragsstaaten:
**DE FR GB IT**

(56) Entgegenhaltungen:
**DE - C - 1 101 098**
**DE - U - 7 829 916**

**"Soviet Inventions Illustrated" Week C 06, 10. März 1980 Section P 54**
**MACHINERY AND PRODUCTION ENGINEERING 28. November 1973 London "SIP and Dixi Cooperate to Develop Tooling System" Seiten 734, 735**

(73) Patentinhaber: **METALLWERK PLANSEE GESELLSCHAFT M.B.H., A-6600 Reutte, Tirol (AT)**

(72) Erfinder: **Rebmann, E., Am Mahlensteig 27, D-7432 Urach 1 (DE)**

(74) Vertreter: **Lohnert, Wolfgang, Dr., Metallwerk Plansee GmbH, A-6600 Reutte, Tirol (AT)**

## Bohrwerkzeug

Die Erfindung betrifft ein Bohrwerkzeug, insbesondere ein mit einer Mehrzahl von Kurzklemmhaltern und/oder Bohrpatronen bestücktes Aufbohrwerkzeug, mit stirnseitig angebrachtem kegelförmigem Passelement sowie mit Vorrichtungen für einen Normalzentralanzug an eine Werkzeugmaschinen-Spindel.

Bohrwerkzeuge werden häufig mittels eines kegelförmigen Passelementes, in Form eines Steilkegels oder Kurzkegels im Werkzeughalter bzw. in der Spindel einer Werkzeugmaschine befestigt. Grössere Bohrwerkzeugeinheiten, insbesondere Sonderwerkzeuge mit einer Mehrzahl von Schneideinheiten über die Mantelfläche des Bohrerschaftes verteilt, werden zudem über einen Normalzentralanzug in der Spindel der Werkzeugmaschine verankert. Der Durchmesser des Passkegels (D) beschränkt die Länge des Bohrwerkzeuges, wobei als maximal zulässige Schaftlänge für Bohrwerkzeuge mit einzelnen über die Schaftoberfläche verteilten Schneidelementen von einem Wert $D \times 5$ bis max. $D \times 6$ auszugehen ist. Diese Bezugnahme entspringt der Praxis. Da das Bohrwerkzeug über den Passkegel mit der Maschinenspindel verbunden ist und in der Regel in diesem Bereich den kleinsten Durchmesser aufweist, bestimmt dieser das durch senkrecht zur Längsachse angreifende Kräfte verursachte Biegemoment am Bohrwerkzeug. Des weiteren werden durch den Durchmesser D die während des Betriebes am Bohrwerkzeug auftretenden Schwingungen entscheidend mitbestimmt. Es ist nun theoretisch denkbar, die Verbindung von Spindel und Werkzeug dadurch zu verbessern, dass die passgenaue Anlage zwischen beiden Teilen über den Bereich des Passkegels hinaus auf die angrenzende Planfläche erweitert wird. Praktisch scheitert eine solche Lösung jedoch daran, dass Stützflächen entsprechender Passgenauigkeit für den Passkegel und zudem für die anschliessende radiale Planfläche nicht bzw. nicht wirtschaftlich herstellbar sind. Üblicherweise werden Bohrwerkzeuge so ausgelegt, dass die Radialflächen von Spindel und Werkzeug im eingespannten Zustand eine Spaltbreite von 0,3–0,4 mm aufweisen, sofern der Werkzeugdurchmesser über dem des Passkegeldurchmessers liegt. Für vorgegebene Werkzeugmaschinen mit festen Spindelabmessungen wird die maximal zulässige Werkzeuglänge oftmals als unbefriedigend angesehen. Daneben besteht bei weit ausladenden Werkzeugen stets die Gefahr, dass infolge von Biegemomenten und Eigenschwingungen die geforderten Werkstücktoleranzen nicht einzuhalten sind.

Aus der SU-A-663 493 ist eine Bohrstange bekannt, deren Bohrkopf über eine Tellerfeder und eine kegelförmig abgeschrägte Scheibe mit Hilfe eines Zentralanzuges mit dem Bohrstangenschaft verbunden ist. Da der Bohrkopf kein kegelförmiges Passelement aufweist und die Scheibe zwischen Tellerfeder und Bohrstangenschaft kegelförmig abgeschrägt ist, wird eine starre kraftschlüssige Verbindung des Bohrkopfes mit dem Bohrstangenschaft bewusst weitgehend vermieden. Die Anordnung dient ausschliesslich der Vermeidung von Schwingungen, wobei die Vibrationsstabilität durch die Änderung der Vorspannung der Tellerfeder verändert werden kann. Die Anordnung dient ausschliesslich zur Vermeidung von Schwingungen des Bohrkopfes. Die Verwendung der beschriebenen Anordnung zur Verbindung des Bohrstangenschaftes mit einer Werkzeugmaschinenspindel ist allenfalls auf kleine Abmessungen beschränkt. Bohrstangen in heute üblicherweise verwendeten Längen, bei welchen entsprechend grosse Biegemomente auftreten, lassen sich mittels der vorbeschriebenen Anordnung nicht zufriedenstellend in der Werkzeugmaschinenspindel halten.

Die Aufgabe der vorliegenden Erfindung ist es, eine Verbindung zwischen Bohrwerkzeug und Maschinenspindel der eingangs genannten Art zu schaffen, bei der die durch den vorgegebenen Passkegeldurchmesser der Maschinenspindel bestimmte maximale Länge des Bohrwerkzeuges vergrössert werden kann und die Schwingungsgefahr des Werkzeuges beim Arbeitseinsatz gleichzeitig verringert wird.

Erfindungsgemäss wird die Aufgabe dadurch gelöst, dass das Bohrwerkzeug stirnseitig in einem Radialbereich ausserhalb des Passelementes ein oder mehrere Vorrichtungen zur Aufnahme von Tellerfedern besitzt, welche Vorrichtungen in Axialrichtung gegen Federkraft verschiebbar sind und beim eingespannten Werkzeug unter Federdruck plan an der Spindelstirnfläche anliegen.

Auf diese Art wird erreicht, dass neben der starren kraftschlüssigen Verbindung über den Passkegel eine durch die Grösse der Federkraft bestimmbare zusätzliche flexible kraftschlüssige Verbindung zwischen Bohrwerkzeug und Maschinenspindel hergestellt wird.

Als besonders günstig hat es sich dabei erwiesen, mindestens sechs Tellerfedern, die in ein oder mehrere Vorrichtungen aufgenommen werden, in gleichen Winkelabständen symmetrisch über den Radialbereich ausserhalb des Passelementes zu verteilen, um einen möglichst gleichmässigen Kraftschluss zwischen Bohrwerkzeug und Maschinenspindel zu gewährleisten.

Gemäss einer vorteilhaften Ausgestaltung der Erfindung sind die Tellerfedern in eine an einem Ende geschlossene Zylinderbüchse eingelegt. Zur Stützung der Tellerfedern wird ein seitlich über die Zylinderbüchse hinausragender Ring auf die Tellerfedern aufgeschoben. Die Zylinderbüchsen liegen in stirnseitig im Werkzeug angebrachten Bohrungen, wobei die geschlossene Seite der Zylinderbüchsen seitlich über die Werkzeugstirnfläche hinausragt.

Nach einer anderen bevorzugten Ausführung der Erfindung sind die Tellerfedern in mehrere stirnseitig eingebrachte Bohrungen im Werkzeug eingelegt. Die Bohrungen sind durch geringfügig über die Werkzeugstirnfläche hinausragende, kolbenartige Zylinder verschlossen.

Die Summe der Federkräfte, die beim geklemmten Werkzeug auf der Spindelstirnfläche angreift, ist den Anzugskräften anzupassen, mit denen der Passkegel des Werkzeuges in der Spindel eingezogen ist. Grössere, das heisst über 300 mm Länge hinausgehende Bohrwerkzeuge werden üblicherweise mit etwa 10 000 N Anzugskraft in der Werkzeugspindel gehalten. Entsprechend hat es sich als günstig erwiesen, als Summe der auf die Spindelstirnfläche wirkenden Federkräfte etwa 5000 N Federkraft vorzusehen.

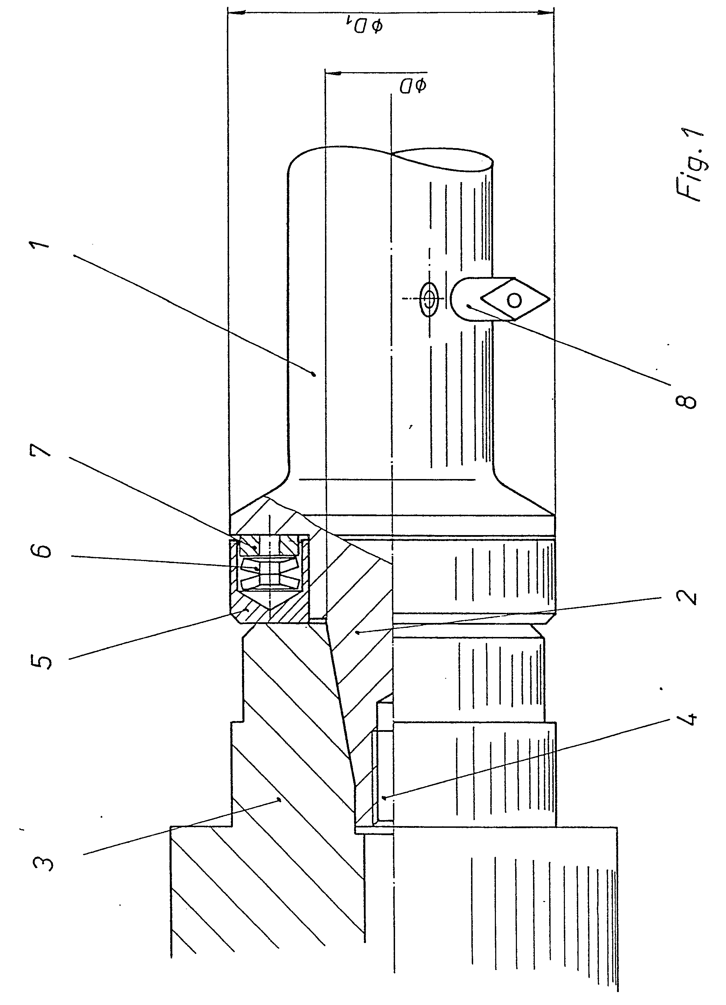

Die Erfindung wird anhand der einzigen Figur näher erläutert. Werkzeug und Spindel sind dort teilweise im Schnitt und teilweise in Draufsicht gezeigt.

Der Schaft 1 des Bohrwerkzeuges ist über einen Steilkegel 2 mit der Spindel 3 verbunden und über Elemente für einen Zentralanzug 4 in der Spindel gehalten. Die spindelseitige Stirnfläche des Bohrwerkzeuges enthält in ihrem äusseren Bereich eine ringförmige Vorrichtung 5, in die sechs Sackbohrungen zur Aufnahme von Tellerfedern 6 eingebracht sind. Die Tellerfedern sind über Ringe 7 in den Sackbohrungen der Vorrichtung gehalten. Der Ring steht über das der Bohrstange zugewandte Ende der ringförmigen Vorrichtung vor, andererseits ragt das andere Ende der Vorrichtung über die stirnseitige Planfläche des Werkzeuges hinaus und liegt unter Federdruck plan an der radialen Stirnfläche der Spindel an. Werkzeug und Spindel sind so genau gearbeitet, dass sich die ringförmige Vorrichtung vornehmlich in Richtung Werkzeuglängsachse bewegen und nur in geringfügigem Masse gegen die Werkzeugachse kippen lässt. Aus Demonstrationsgründen ist ein in der Werkzeugmantelfläche eingebrachtes Kurzklemmwerkzeug 8 angedeutet.

Während sich die radiale Abstützung des Werkzeuges in der Spindel bisher auf einen Bereich vom Durchmesser D beschränkt hatte, wird durch die erfindungsgemässe Ausführung des Bohrwerkzeuges eine radiale Abstützung bis zum Durchmesser $D_1$ erreicht. Dadurch lässt sich die Länge des Werkzeuges im Bedarfsfalle entsprechend vergrössern.

Daneben bewirkt die radiale Abstützung des Werkzeuges gegen die Spindel unter Federdruck eine spürbare Dämpfung der Schwingungen, die während des Arbeitseinsatzes am Bohrwerkzeug auftreten.

## Patentanspruch

Bohrwerkzeug, insbesondere mit einer Mehrzahl von Kurzklemmhaltern und/oder Bohrpatronen bestücktes Aufbohrwerkzeug, mit stirnseitig angebrachtem kegelförmigem Passelement (2) sowie mit Vorrichtungen für einen Normalzentralanzug (4) an eine Werkzeugmaschinen-Spindel (3), dadurch gekennzeichnet, dass das Bohrwerkzeug stirnseitig in einem Radialbereich ausserhalb des Passelementes (2) eine oder mehrere Vorrichtungen (5) zur Aufnahme von Tellerfedern (6) besitzt, welche Vorrichtungen in Achsrichtung gegen Federkraft verschiebbar sind und beim eingespannten Werkzeug unter Federdruck plan an der Spindel-Stirnfläche anliegen.

## Revendication

Dans un outil d'alésage, en particulier un outil de réalésage, qui est équipé d'un grand nombre de cartouches (8) et/ou de gabarits d'alésage, outre la fixation de l'outil d'alésage avec la broche (3) de la machine-outil par l'intermédiaire d'un élément adaptateur disposé frontalement, par exemple sous la forme d'un cône rapide et d'un entraînement central normal (4), sont prévues des mesures de fixation supplémentaires. L'outil d'alésage comporte à cet effet frontalement, dans une région radiale à l'extérieur de l'élément adaptateur (2), un ou plusieurs dispositifs (5) pour recevoir des ressorts Belleville (6), les dispositifs (5) pouvant se déplacer suivant la direction axiale à l'encontre de la force des ressorts et, lorsque l'outil est serré, s'appuyant de façon plane sur la surface frontale de l'outil sous l'action des ressorts. De cette manière, la longueur maximale de l'outil, qui dépend du diamètre, peut être augmentée. Simultanément la stabilité vis-à-vis des oscillations est améliorée.

## Claim

Boring tool, preferably a tool for widening drill holes, equipped with more than one cartridge tool holder and/or fine boring cartridge, comprising a conical adaptor element at the front side and means for tightening the boring tool centrally to the spindle of a tool machine, characterized in, that the boring tool comprises at the front side in a radial section outside the adaptor element one or more means for the reception of plate springs which means are movable against spring tension in the direction of the axis and which abut, under spring pressure, closely on the plane front surface of the spindle when the tool is clamped.

Fig. 1

0 061 099